# EUROPÄISCHE PATENTANMELDUNG

(11) **EP 2 070 775 A1**
(43) Veröffentlichungstag der Anmeldung: **17.06.2009**
(21) Anmeldenummer: 08102127.1
(22) Anmeldetag: 28.02.2008
(51) Int. Cl.: B60R 21/13

(54) **Überrollschutzeinrichtung mit Glasbrecher**

(30) Priorität: 13.12.2007 DE 102007061063
(71) Anmelder: ISE Automotive GmbH, 51702 Bergneustadt (DE)
(72) Erfinder: Nass, Michael, 51702, Bergneustadt (DE); Janisch, Mirko, 53797, Lohmar (DE); Menne, Hans Gerd, 51702, Bergneustadt (DE); Liesaus, Frank, 51702, Bergneustadt (DE)
(74) Vertreter: Fuchs

(57) **Zusammenfassung**

Für eine Überrollschutzeinrichtung für Kraftfahrzeuge mit einem abnehmbaren oder versenkbaren Dach wird eine glasbrechende Vorrichtung vorgeschlagen, die aus einem Masseteil (3) mit einem Dorn (4) besteht, das im oberen Teil eines Überrollkörpers (2) in einem Führungskanal (5) unterhalb der oberen Begrenzung des Überrollkörpers (2) gehalten wird und in Ausfahrrichtung des Überrollkörpers (2) durch Trägheitskräfte aus dem Führungskanal (5) verschiebbar ist, wenn der Überrollkörper (2) beim Auftreffen auf eine in das Dach integrierte Scheibe (1) vorübergehend abgebremst wird.

Das axial bewegliche Masseteil (3) hat beim Auftreffen auf die Scheibe (1) die gleiche Geschwindigkeit wie der Überrollkörper (2), es wird aber nicht abgebremst und kann daher geschossartig dem Überrollkörper (2) vorauseilen, die Scheibe (1) zerbrechen oder doch zumindest erheblich schwächen.

Die Vorrichtung ist als Baueinheit (6) konzipiert und in eine Bohrung (7) im Kopfteil des Überrollkörpers (2) eingesetzt. Sie besitzt einen Flansch (8) und ist im Überrollkörper (2) mittels eines Stiftes (9) unverschieblich gehalten.

## Beschreibung

Die Erfindung betrifft eine Überrollschutzeinrichtung für Kraftfahrzeuge mit einem abnehmbaren oder versenkbaren Dach, umfassend einen Überrollkörper, der aus einer fixierten Ruhestellung durch eine in das Dach integrierte Scheibe in eine oberhalb der Scheibe liegende, feststellbare Schutzstellung ausfahrbar ist, eine sensorgesteuerte Antriebseinrichtung für den Überrollkörper und eine Vorrichtung, mit der die Scheibe aufbrechbar oder zumindest wirksam schwächbar ist.

Mit derartigen Überrollschutzeinrichtungen werden Personenkraftwagen ausgerüstet, bei denen das Dach abnehmbar oder versenkbar ist und für die im Falle eines Überschlags eine stabile Abstützung der umgedrehten Karosserie auf dem Untergrund vorgesehen werden muss, um einen Sicherheitsraum für die Fahrgäste zu schaffen. Sie sind auch dann erforderlich, wenn das Fahrzeug eine zwar permanente, aber nicht hinreichend stabile Dachkonstruktion aufweist. Derartige Fahrzeuge werden im Rahmen dieser Anmeldung gleichgesetzt mit solchen, die ein abnehmbares oder versenkbares Dach aufweisen.

Die in das Dach integrierte Scheibe kann als Heckscheibe für die Orientierung über den Rückspiegel nach hinten oder als Dachscheibe für den Lichteinlass in das Fahrzeug ausgebildet sein. Sie wird aber immer so angeordnet, dass sie im Ausfahrweg des Überrollkörpers liegt, um das Durchstoßen der Dachkonstruktion zu erleichtern bzw. überhaupt zu ermöglichen. Sie hat - für den Fall eines Überschlags - neben ihrer Hauptfunktion quasi die Funktion einer "Sollbruchstelle".

Es hat sich allerdings herausgestellt, dass es vielfach nicht genügt, wenn die Scheibe vom Überrollkörper selbst zerstört oder verlagert wird. Scheiben aus Plexiglas sind im Vergleich zu echtem Glas relativ elastisch und nicht so leicht aufzubrechen. Auch die Einfassung der Scheiben, die aus elastischem Material bestehen, erschweren ein Aufbrechen. Schließlich sind faltbare Dächer auch kein starres Widerlager, das im Zusammenspiel mit dem ausfahrenden Überrollkörper das Aufbrechen erleichtern würde.

Man hat daher schon Überlegungen angestellt, wie die im Ausfahrweg des Überrollkörpers angeordnete Scheibe wirksamer aufgebrochen oder zumindest geschwächt werden kann, um die Behinderung des Überrollkörpers beim Ausfahren zu vermindern. Ohne solche Maßnahmen müsste man sicherheitshalber die Antriebseinrichtungen verstärken, was aus Platzgründen oft nicht möglich ist und das Fahrzeuggewicht unnötig erhöhen würde.

Aus der EP 1 510 412 A1 ist ein Überrollkörper bekannt geworden, dessen oberer Querholm mit mindestens einem glasbrechenden, die Scheibe zuerst erreichenden Dorn aus Hartmetall ausgestattet ist. Das erleichtert zwar das Aufbrechen von Glas, bringt bei elastischen Materialien aber kaum einen Vorteil, weil die gesamte Aufbrechkraft vom ausfahrenden Überrollkörper selbst aufgebracht werden muss.

Das gleiche gilt für den glasbrechend ausgebildeten Verschleißschutz gemäß DE 10 2006 006 658 B3, der am oberen Ende des Überrollkörpers angebracht ist.

Diese Nachteile werden bei den aus der DE 20 2006 003 649 U1 und der EP 1 510 412 A1 bekannten separaten Öffnungs-Einrichtungen zwar überwunden, die aber von vielen Kraftfahrzeug-Herstellern als zu aufwändig angesehen werden.

Es besteht somit die Aufgabe, einen Weg aufzuzeigen, wie eine in ein Fahrzeugdach integrierte Scheibe, die beim Ausfahren des Überrollkörpers durchstoßen werden muss, möglichst unaufwändig zerstört oder zumindest wirksam geschwächt werden kann.

Erfindungsgemäß wird diese Aufgabe bei einer Überrollschutzeinrichtung der eingangs genannten Art mit einer Vorrichtung gelöst, die aus einem im oberen Teil des Überrollkörpers längsverschieblich gelagerten "Glasbrecher" besteht, der beim Auftreffen des Überrollkörpers auf die Scheibe relativ zum Überrollkörper in Ausfahrrichtung beschleunigt wird.

Bei einer ersten Ausführungsform des Erfindungsgedankens besteht der "Glasbrecher" aus einem Masseteil mit einem Dorn, das in einem Führungskanal unterhalb der oberen Begrenzung des Überrollkörpers gehalten wird und in Ausfahrrichtung des Überrollkörpers durch Trägheitskräfte aus dem Führungskanal verschiebbar ist, wenn der Überrollkörper beim Auftreffen auf die Scheibe vorübergehend abgebremst wird (Anspruch 2).

Bei einer zweiten Ausführungsform des Erfindungsgedankens ist vorgesehen, dass der "Glasbrecher" einen aus dem oberen Teil des Überrollkörpers vorstehenden, verschieblich gelagerten Führungskanal einen aus dem Führungskanal austreibbaren Dorn und einen pyrotechnischen Antrieb umfasst, der gezündet wird, wenn der Führungskanal beim Auftreffen auf die Scheibe entgegen der Ausfahrrichtung verschoben wird (Anspruch 9).

Vorteilhafte Weiterbildungen des Erfindungsgedankens sind in den Unteransprüchen 3 bis 8 und 10 bis 15 beschrieben.

Weitere Einzelheiten und Vorteile werden anhand der Figuren 1 bis 7 näher erläutert.

Es zeigen:
- Fig. 1 und 2: die erste Ausführungsform der Erfindung mit einem Überrollkörper in Ruhe- und Schutzstellung,
- Fig. 3 und 4: eine Baueinheit der ersten Ausführungsform mit einem Masseteil in Ausgangs- und Wirkstellung,
- Fig. 5 bis 7: die zweite Ausführungsform des Erfindungsgedankens in drei zeitlich aufeinander folgenden Momenten.

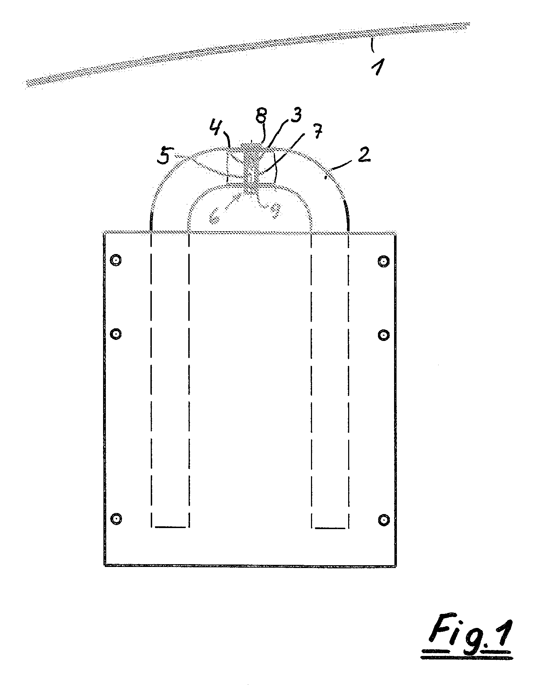

In Fig. 1 ist der Überrollkörper 2 in seiner Ruhestellung unterhalb der Scheibe 1 dargestellt. In dieser Stellung wird er durch eine nicht dargestellte Halteeinrichtung gehalten, die im Auslösefall entriegelt wird, so dass der Überrollkörper 2 unter der Wirkung einer nicht dargestellten Antriebseinrichtung in seine oberhalb der Scheibe 1 liegende feststellbare Schutzstellung ausfahren kann.

Die Baueinheit 6 ist in eine Bohrung 7 des Überrollkörpers 2 eingesetzt und liegt mit ihrem Flansch 8 auf der oberen Begrenzung des Überrollkörpers 2 auf. Sie umfasst einen Führungskanal 5, in dem ein Masseteil 3 axial verschieblich gehalten ist. Die Baueinheit selbst ist im Überrollkörper 2 durch einen Stift 9 festgelegt.

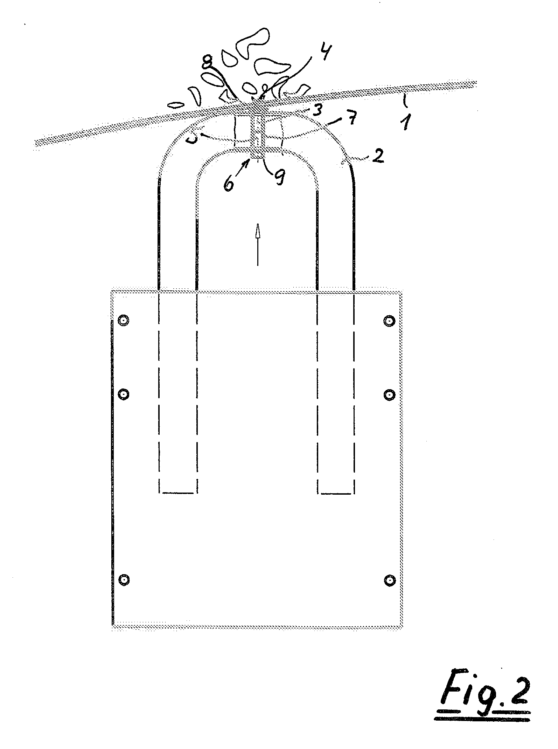

In Fig. 2 ist der Überrollkörper 2 im Moment des Auftreffens auf die Scheibe 1 dargestellt. Die dadurch zwangsläufig erfolgende Verzögerung des Überrollkörpers 2 hat zur Folge, dass das Masseteil 3 unter der Wirkung von Trägheitskräften aus dem Führungskanal 5 vortritt und die Scheibe 1 mit seinem Dorn 4 zerstört oder schwächt. Die Darstellung gemäß Fig. 2 zeigt außerdem einen Moment nach der Zerstörung der Scheibe 1 und die dabei entstehenden Bruchstücke.

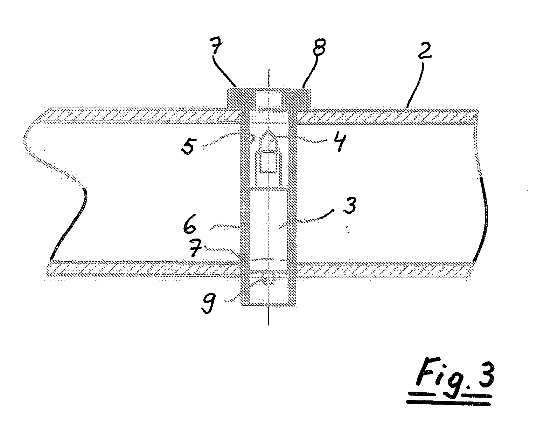

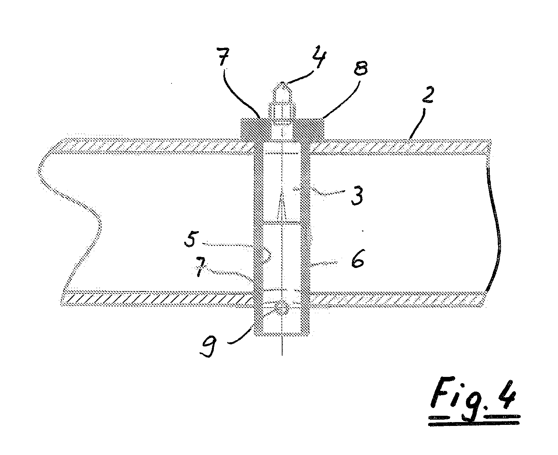

Fig. 3 und 4 zeigen im Detail die Anordnung der Baueinheit 6 im Überrollkörper 2, der häufig aus einem Rohr oder hohlen Strangpressprofil besteht. In Fig. 3 ist der Massekörper 3 mit seinem Dorn 4 in seiner Ausgangsstellung dargestellt, wobei die Spitze des Dorns 4 sich zur Vermeidung von Verletzungen unterhalb der oberen Kante des Flansches 8 im Inneren des Führungskanals 5 befindet. Die Baueinheit ist in eine Bohrung 7 im oberen und unteren Teil des Überrollkörpers 2 eingesetzt und mittels eines Stiftes 9 in dieser Position gesichert.

In Fig. 4 ist das Masseteil 3 mit Dorn 4 in seiner ausgefahrenen, glasbrechenden Position dargestellt. Dabei liegt der im Durchmesser größere Teil des Masseteils 3 innen am Flansch 8 der Baueinheit 6 an. Eine weitere Auswärtsbewegung des Masseteils 3 wird damit ausgeschlossen.

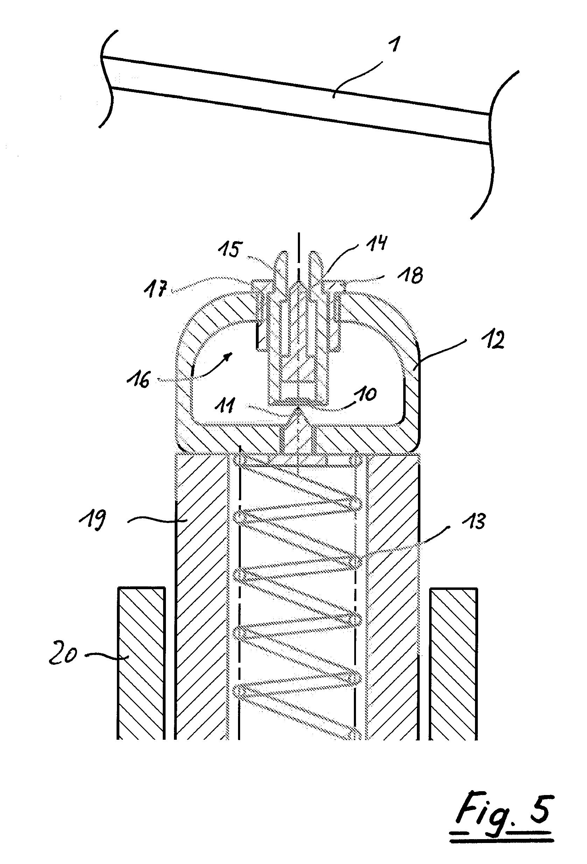

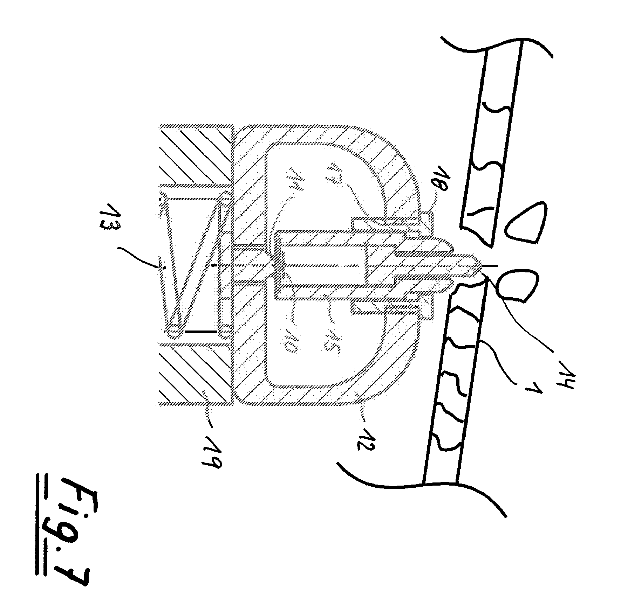

In den Figuren 5 bis 7 ist eine zweite Ausführungsform des Erfindungsgedankens in zeitlich aufeinander folgenden Momenten dargestellt. Die Darstellungen sind schematisiert und nicht streng maßstäblich. In Fig. 5 ist der Überrollkörper 12 in seiner Ausgangsstellung dargestellt, in der die Antriebsfeder 13 gespannt ist und die Schenkel 19 des Überrollkörpers 12 in einer fahrzeugfesten Führung 20 angeordnet sind. Im oberen Teil des Überrollkörpers 12 ist eine Bohrung 17 eingebracht, in die eine aus Dorn 14, Führungskanal 15, pyrotechnischen Antrieb 10 und Einbauhülse 18 bestehende Bauheinheit 16 eingesetzt ist. Führungskanal 15 und Dorn 14 sind längs verschieblich ausgebildet, wobei durch abgestufte Durchmesserausbildungen dafür gesorgt ist, dass die Längsverschiebung bestimmte Grenzen nicht überschreiten kann. Der pyrotechnische Antrieb 10 befindet sich im hinteren Ende des Führungskanals 15 unmittelbar gegenüber einer Zündspitze 11, die im Überrollkörper 12 fest angeordnet ist.

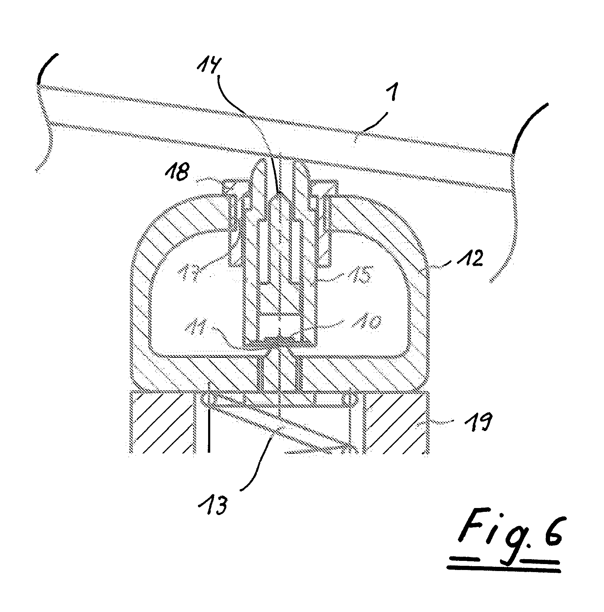

Wenn der Führungskanal 15 beim Auftreffen auf die Scheibe einwärts verschoben wird, trifft der pyrotechnische Antrieb auf die Zündspitze und wird gezündet (Fig. 6).

Danach wird der Dorn 14, der im Führungskanal 15 kolbenartig geführt ist, von den Reaktionsgasen des pyrotechnischen Antriebs 10 auswärts getrieben und durchbricht die Scheibe 1.

Die letztgenannten Vorgänge erfolgen während der Auswärtsbewegung des Überrollkörpers 12, wobei der Dorn 14 relativ zum ausfahrenden Überrollkörper 12 beschleunigt wird, die Scheibe 1 zerstört oder zumindest schwächt, so dass der Überrollkörper die Scheibe 1 durchstossen und in seine feststellbare Schutzstellung oberhalb der Scheibe ausfahren kann.

### Bezugszeichenliste

- 1: Scheibe
- 2, 12: Überrollkörper
- 3: Masseteil
- 4, 14: Dorn
- 5, 15: Führungskanal
- 6,16: Baueinheit
- 7,17: Bohrung
- 8: Flansch
- 9: Stift
- 10: pyrotechnischer Antrieb
- 11: Zündspitze
- 13: Antriebsfeder
- 18: Einbauhülse
- 19: Schenkel des Überrollkörpers
- 20: Führung für den Überrollkörper

## Patentansprüche

1. Überrollschutzeinrichtung für Kraftfahrzeuge mit einem abnehmbaren oder versenkbaren Dach, umfassend
- einen Überrollkörper (2, 12), der aus einer fixierten Ruhestellung durch eine in das Dach integrierte Scheibe (1) in eine oberhalb der Scheibe (1) liegende feststellbare Schutzstellung ausfahrbar ist,
- eine sensorgesteuerte Antriebseinrichtung für den Überrollkörper (2, 12) und
- eine Vorrichtung, mit der die Scheibe (1) aufbrechbar oder zumindest wirksam schwächbar ist,
**dadurch gekennzeichnet, dass** die Vorrichtung aus einem im oberen Teil des Überrollkörpers (2, 12) längsverschieblich gelagerten "Glasbrecher" (4, 14) besteht, der beim Auftreffen des Überrollkörpers (2, 12) auf die Scheibe (1) relativ zum Überrollkörper (2, 12) in Richtung Scheibe (1) beschleunigt wird.

2. Überrollschutzeinrichtung nach Anspruch 1, **dadurch gekennzeichnet, dass** der "Glasbrecher" aus einem Masseteil (3) mit einem Dorn (4) besteht, das in einem Führungskanal (5) unterhalb der oberen Begrenzung des Überrollkörpers (2) gehalten wird und in Ausfahrrichtung des Überrollkörpers (2) durch Trägheitskräfte aus dem Führungskanal (5) verschiebbar ist, wenn der Überrollkörper (2) beim Auftreffen auf die Scheibe (1) vorübergehend abgebremst wird.

3. Überrollschutzeinrichtung nach Anspruch 1 oder 2, **dadurch gekennzeichnet, dass** das Masseteil (3) mit dem Dorn (4) und dem Führungskanal (5) als Baueinheit (6) konzipiert ist, die in eine Bohrung (7) im Kopfteil des Überrollkörpers (2) eingesetzt ist.

4. Überrollschutzeinrichtung nach einem der Ansprüche 1 bis 3, **dadurch gekennzeichnet, dass** die Baueinheit (6) einen Flansch (8) aufweist, der in montiertem Zustand auf der oberen Begrenzung des Überrollkörpers (2) aufliegt.

5. Überrollschutzeinrichtung nach Anspruch 4, **dadurch gekennzeichnet, dass** die Spitze des Dorns (4) nicht über den oberen Rand des Flansches (8) vorsteht, sich in montiertem Zustand vorzugsweise etwas zurückgezogen unterhalb des oberen Endes des Führungskanals (5) befindet.

6. Überrollschutzeinrichtung nach einem der Ansprüche 1 bis 5, **dadurch gekennzeichnet, dass** das Masseteil (3) im Durchmesser abgestuft ausgebildet ist, wobei seine Auswärtsbewegung gestoppt wird, wenn das Masseteil (3) mit seinem im Durchmesser größeren Teil innen am Flansch (8) zur Anlage kommt.

7. Überrollschutzeinrichtung nach einem der Ansprüche 1 bis 6, **dadurch gekennzeichnet, dass** das Masseteil (3) in seiner Ausgangsstellung im Führungskanal (5) kraft-, form- oder stoffschlüssig positioniert ist.

8. Überrollschutzeinrichtung nach einem der Ansprüche 1 bis 7, **dadurch gekennzeichnet, dass** die Baueinheit (6) durch einen Stift (9) oder dergleichen im Kopfteil des Überrollkörpers (2) unverschieblich gehalten ist.

9. Überrollschutzeinrichtung nach Anspruch 1, **dadurch gekennzeichnet, dass** der "Glasbrecher" einen aus dem oberen Teil des Überrollkörpers (12) vorstehenden, verschieblich gelagerten Führungskanal (15), einen aus dem Führungskanal (15) austreibbaren Dorn (14) und einen pyrotechnischen Antrieb (10) umfasst, der gezündet wird, wenn der Führungskanal (15) beim Auftreffen auf die Scheibe (1) entgegen der Ausfahrrichtung verschoben wird.

10. Überrollschutzeinrichtung nach Anspruch 9, **dadurch gekennzeichnet, dass** der pyrotechnische Antrieb (10) im hinteren Ende des Führungskanals (15) angeordnet ist.

11. Überrollschutzeinrichtung nach Anspruch 9 oder 10, **dadurch gekennzeichnet, dass** im Überrollkörper (12) eine gegen das hintere Ende des Führungskanals (15) gerichtete Zündspitze (11) angeordnet ist.

12. Überrollschutzeinrichtung nach einem der Ansprüche 9 bis 11, **dadurch gekennzeichnet, dass** Führungskanal (15), Dorn (14), pyrotechnischer Antrieb (10) zusammen mit einer Einbauhülse (8) als Baueinheit (16) konzipiert sind, die in eine Bohrung (17) im Kopfteil des Überrollkörpers (12) eingesetzt ist.

13. Überrollschutzeinrichtung nach Anspruch 12, **dadurch gekennzeichnet, dass** die Baueinheit (16) in montiertem Zustand mit einem Flansch der Einbauhülse (18) auf der oberen Begrenzung des Überrollkörpers (12) aufliegt.

14. Überrollschutzeinrichtung nach einem der Ansprüche 9 bis 13, **dadurch gekennzeichnet, dass** der Dorn (14) im Durchmesser abgestuft ausgebildet ist, wobei seine Auswärtsbewegung gestoppt wird, wenn er mit seinem im Durchmesser größeren Teil innen an einem Vorsprung des Führungskanals (15) zur Anlage kommt.

15. Überrollschutzeinrichtung nach einem der Ansprüche 9 bis 14, **dadurch gekennzeichnet, dass** der Führungskanal (15) gegen unbeabsichtigtes Verschieben gesichert ist.
